# EUROPÄISCHE PATENTSCHRIFT

(11) **EP 1 366 628 B1**
(45) Veröffentlichungstag und Bekanntmachung des Hinweises auf die Patenterteilung: **02.04.2014**
(21) Anmeldenummer: 02706646.3
(22) Anmeldetag: 29.01.2002
(51) Int. Cl.: H04Q 3/00, H04Q 3/78, H04Q 11/04

(54) **VERFAHREN ZUR ÜBERTRAGUNG EINER SIGNALISIERUNGSNACHRICHT IM SS 7-NETZ**
METHOD FOR TRANSMITTING A SIGNALING MESSAGE IN AN SS 7 NETWORK
PROCEDE DE TRANSMISSION D'UN MESSAGE DE SIGNALISATION DANS UN RESEAU SS 7

(30) Priorität: 06.03.2001 DE 10110679
(43) Veröffentlichungstag der Anmeldung: 03.12.2003
(73) Patentinhaber: Nokia Solutions and Networks GmbH & Co. KG, 81541 Munich (DE)
(72) Erfinder: SERROYEN, Gert, B-2627 Schelle (BE)
(74) Vertreter: Weidel, Gottfried
(86) Internationale Anmeldenummer: PCT/DE2002/000313
(87) Internationale Veröffentlichungsnummer: WO 2002/071769

(56) Entgegenhaltungen:
- WO-A-00/22840
- US-A- 5 838 782
- CLARKE P G: "INTERNODAL SIGNALLING" BRITISH TELECOMMUNICATIONS ENGINEERING, Bd. 13, Nr. PART 1, 1. April 1994 (1994-04-01), Seiten 71-85, XP000446930 LONDON, GB ISSN: 0262-401X
- KUEHN P J ET AL: "COMMON CHANNEL SIGNALING NETWORKS: PAST, PRESENT, FUTURE" IEEE JOURNAL ON SELECTED AREAS IN COMMUNICATIONS, Bd. 12, Nr. 3, 1. April 1994 (1994-04-01), Seiten 383-394, XP000458683 NEW YORK, USA ISSN: 0733-8716

## Beschreibung

Die Erfindung betrifft ein Verfahren zur Übertragung einer Signalisierungsnachricht in einem Netz vom Typ Zeichengabesystem Nr. 7 (SS#7) von einem Quellen- zu einem Bestimmungsort mittels eines SCCP(Signalling Connection Control Part)-Übertragungsprotokolls, wobei die Signalisierungsnachricht mit einem globalen Namen zur Identifizierung des Bestimmungsortes adressiert wird.

WO 00/22840 betrifft ein Verfahren sowie ein System zum Einrichten einer Telekommunikationsverbindung in einem Telekommunikationsnetzwerk umfassend ein Telekommunikationsendgerät, eine Telefonvermittlung und ein intelligentes Netzwerk, das wiederum eine Dienstvermittlungsstelle, ein Gateway, ein Signalisierungsnetzwerk sowie einen oder mehrere Dienstkontrollpunkt(e) umfasst. Der Dienstkontrollpunkt ist mit dem Gateway und mit dem Signalisierungsnetzwerk verbunden. Das Gateway ist mit dem Signalisierungsnetzwerk verbunden.

Für Verfahren zur Übertragung einer Signalisierungsnachricht werden häufig SCCP-Übertragungsprotokolle in einem SS#7-Netz verwendet, die als der Signalling Connection Control Part (SCCP) ergänzend auf dem Message Transfer Part (MTP) in den SS#7-Funktionen angeordnet sind. Das SCCP-Protokoll findet häufig Verwendung in öffentlichen, leistungsvermittelten Telefonnetzen und den Mobilfunksystemen. Das SCCP-Protokoll bietet erweiterte Informationsübertragungkapazitäten für verschiedenste Nutzungen des Signalisierungsnetzes an, wie zum Beispiel Abfragen einer Datenbank in einem intelligenten Netz, das erfolgreiche Herstellen einer vermittelten Verbindung zwischen zwei Teilnehmern eines Telekommunikationsnetzes, mobiles Roaming und Handover-Dienste etc.

Die Benutzer des SCCP-Protokolls können bei der Übertragung von Signalisierungsnachrichten eine global über die Grenzen eines bestimmten Netzes hinweg gültige Adresse verwenden, um den Bestimmungsort zu identifizieren. Derartige Adressen werden globale Namen (GT, Global Title) genannt und werden aus einer Kombination von Ziffern zusammengesetzt. Der globale Name wird von Transitknoten dazu verwendet, die Route zu dem nächstliegenden Umsetzungsknoten zu bestimmen. Die hierfür notwendige Adressumsetzung des globalen Namens (GTT, Global Title Translation) ermöglicht das Routing der Signalisierungsnachrichten.

Das SCCP-Protokoll ist ein ITU-standardisiertes Common Channel Signalling System 7 (CCS7)-Signalisierungsprotokoll (ITU Q.711-Q.714) und ist der Schicht 3 im OSI-Referenzmodell zuzuordnen. Die der Schicht 3 zuzuordnenden Protokolle dienen dazu, die Route durch das Netz von dem Quellen- zu dem Bestimmungsort zu bestimmen, wobei die Route statisch gleichbleibend vorhanden sein kann, wie es beispielsweise durch das Verwenden von Routing-Tabellen ermöglicht wird. Die Route kann auch abhängig von der momentanen Auslastung des Netzes entsprechend gewählt werden. Im letzteren Fall wird eine geeignete Route für jede logische Verbindung oder sogar für jede zu sendende Nachricht gewählt, abhängig davon, wie die momentane Auslastungssituation von bestimmten Bestimmungsortsknoten ist.

Die Adressumsetzung von globalen Namen bei SCCP-Protokollen basiert auf der Adressumsetzung des Bestimmungsortes bzw. des angerufenen Teilnehmers. Daraus ergibt sich, daß die globalen Namen die Ziffern der Bestimmungsortadresse beinhalten. Eine Unterscheidung zwischen den einzelnen Quellenort-Adressen fand jedoch bisher nicht statt. Daraus ergibt sich als nachteilig für die für die Fernvermittlung von netzüberschreitendem Verkehr zuständige Telekommunikationsfirmen (IXC, Inter-Exchange Carrier), die SS7-Netzübertragungsdienste für benachbarte Betreiber anbieten, daß abhängig von der Herkunft eines Gespräches keine Unterscheidung bezüglich der Leistungsfähigkeit des Netzes gemacht werden kann.

Der Erfindung liegt die Aufgabe zugrunde, ein Verfahren zur Übertragung von Signalisierungsnachrichten zur Verfügung zu stellen, das eine Unterscheidung der Signalisierungsnachricht in Abhängigkeit von der Herkunft zuläßt.

Diese Aufgabe wird nach den Merkmalen des Anspruches 1 gelöst. Vorteilhafte Ausführungsformen ergeben sich aus den Unteransprüchen.

Kern der Erfindung ist die Zuordnung einer zusätzlichen Adressinformation zu dem globalen Namen, bevor eine Adressumsetzung des globalen Namens in dem SS#7-Netz durchgeführt wird, um eine geeignete Route für die Übertragung der Signalisierungsnachricht zu bestimmen. Durch das Hinzufügen der zusätzlichen Adressinformation ist eine Unterscheidung in verschiedenen SS#7-Adressumsetzungen möglich, so daß eine bestimmter Adressumsetzer ausgewählt werden kann, um den dazugehörigen Leitweg zu bestimmen. So kann der Leitweg abhängig von der zusätzlichen Adressinformation, die für die Herkunft der Signalisierungsnachricht steht, derart bestimmt werden, daß billigere oder kostenintensivere Leitungen belegt werden. Diese Leitungen können sich dadurch auszeichnen, daß sie eine mehr oder weniger hohe Leistungsfähigkeit zur Übertragung der Signalisierungsinformation aufweisen. So kann der IXC-Betreiber Betreibern von anderen Netzen billigere Verkehrsvermittlungsdienste anbieten, wenn die anderen Betreiber für die Übertragung ihrer Signalisierungsnachrichten keine Leitungen mit hoher Leistungsfähigkeit und hohem Qualitätsstandard benötigen.

Weitere Vorteile sind:
- Mehrdeutige Rufnummernpläne, wenn Routing-Entscheidungen nicht ausschließlich basierend auf der Information des globalen Namens durchgeführt werden können, wie zum Beispiel bei Rufnummernüberlappung des von Rufnummern angerufenen Teilnehmers.
- Wenn eine unbekannte Struktur des Rufnummernplans vorhanden ist, kann anhand der Herkunftsinformation ein nächster Umsetzungsknoten ausgewählt werden.
- Wenn eine geringe Leistungsfähigkeit des Netzes vorhanden ist, da sämtliche Teilnehmernummern analysiert werden müssen, können durch Verwendung der Herkunft-Adressinformation Route-Entscheidungen in einem frühen Stadium der Übertragung gefällt werden.

Durch die Zuordnung einer Adressinformation zu dem globalen Namen, die die Identifizierung des Betreibers am Quellenort angibt, ist das Auswählen von Regeln verschiedenster Art abhängig von der Herkunft der Signalisierungsnachricht möglich. Hierfür wird vor der eigentlichen Adressumsetzung des globalen Namens die Adressinformation zu dem globalen Namen, der die Adresse des anzurufenen Teilnehmers beinhaltet, hinzugefügt, um dann nach der Adressumsetzung wieder aus dem globalen Namen entfernt zu werden. Dafür wird eine bestimmte Ziffernfolge, die für die Herkunft der Signalisierungsnachricht steht, in die Ziffernfolge des globalen Namens des anzurufenden Teilnehmers eingefügt, indem die zusätzlichen Ziffern der ursprünglichen Ziffernfolge vorangestellt werden. Nach Durchlaufen einer Adressumsetzungsfunktion des globalen Namens werden diese Ziffern wieder aus dem globalen Namen entfernt. Hierbei kann die zusätzliche Adressinformation jede Art von Parametern beinhalten, welche für die Signalisierungsnachrichtenübertragung mittels dem SCCP-Protokoll Informationen beinhalten.

Mit Bezug auf die beigefügten Figuren werden nun zwei Ausführungsformen der Erfindung beschrieben. Hierbei zeigen:
Fig. 1 eine erste Ausführungsform der Erfindung und
Fig. 2 eine zweite Ausführungsform der Erfindung.

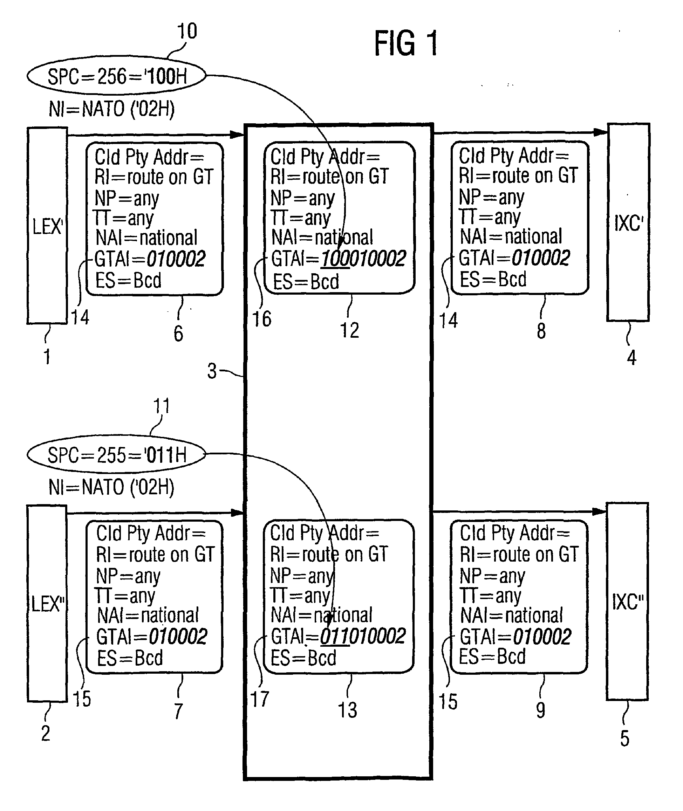

Die in Fig. 1 gezeigte erste Ausführungsform der Erfindung zeigt das Auswählen eine geeigneten Route für die Übertragung einer Signalisierungsnachricht abhängig von der Herkunft der Signalisierungsnachricht. Eine Ortsvermittlungsstelle 1 oder 2 sendet als Quellenort eine Signalisierungsnachricht 6, 7 an eine Durchgangs-Vermittlungsstelle 3, wobei jede Signalisierungsnachricht 6 und 7 einen ersten globalen Namen 14 und 15 (GTAI) mit einer bestimmten Ziffernfolge für die Adresse des anzurufenden Teilnehmers beinhaltet. Durch Hinzufügen einer für den Quellenort kennzeichnenden Adressinformation 10 und 11 in Form einer Ziffernfolge zu dem ersten globalen Namen 14 und 15 wird in der Durchgangs-Vermittlungsstelle ein zweiter globaler Name 16 und 17 mit einer Adresse erhalten, die sowohl zur Identifizierung des Bestimmungsortes als auch zur Identifizierung des Herkunftsortes dient.

Die sich daraus ergebenden Signalisierungsnachrichten 12 und 13 werden dem Verfahren der Adressumsetzungsfunktion des globalen Namens (GTT-Funktion) unterworfen. Die Adressinformation des anzurufenden Teilnehmers wird hierbei analysiert, um so eine passende Route zu dem nächsten Gateway auszuwählen. Nach Auswählen der Route wird aus den zweiten globalen Namen 16 und 17 die zusätzliche Adressinformation 10 und 11 wieder entfernt. Dadurch werden die ursprünglichen ersten globalen Namen 14 und 15 mit dem ursprünglichen Inhalt in den Signalisierungsnachrichten 8 und 9 erhalten. Anschließend findet die eigentliche Übertragung der Signalisierungsnachricht durch die Telekommunikationsfirma 4 und 5 (IXC) für die Fernvermittlung des Gesprächs statt.

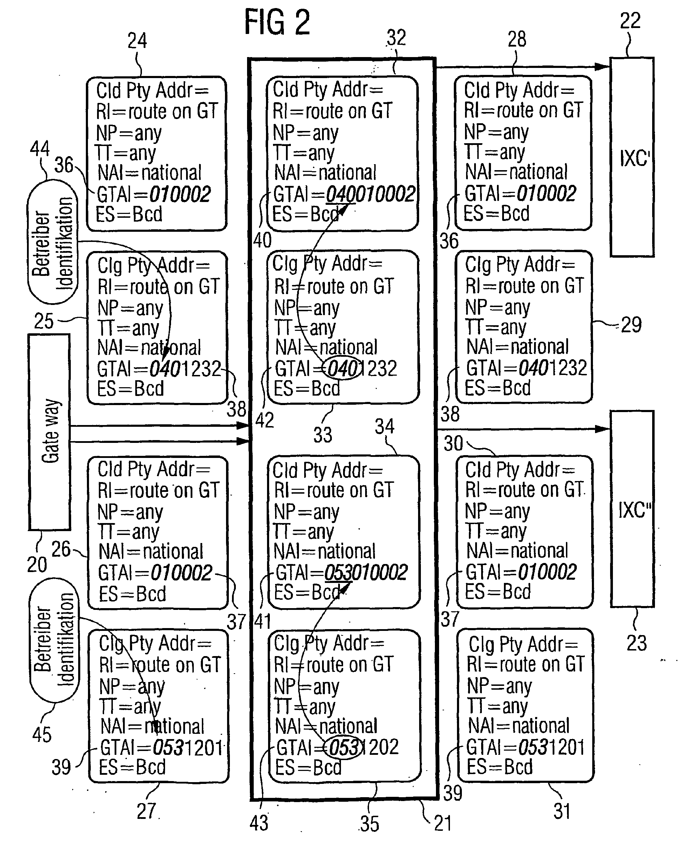

Figur 2 zeigt eine zweite Ausführungsform der Erfindung, in der über ein Gateway 20 eingehende Signalisierungsnachrichten 24-27 an eine Durchgangsvermittlungsstelle 21 übertragen werden. Eine weitere Gruppe Signalisierungsnachrichten 28-31 beinhaltet die Signalisierungsnachrichten nach Durchlaufen der Adressumsetzungsfunktion. Die Signalisierungsnachrichten 32-35 sind die Nachrichten während des Durchlaufens der Adressumsetzungsfunktion. Die ersten globalen Namen 36 und 37 enthalten eine Ziffernfolge, die ausschließlich die Adresse des anzurufenden Teilnehmers beinhaltet. In den zweiten globalen Namen 38 und 39 ist u.a. die Ziffernfolge 44, 45 für die I-dentifizierung des Betreibers, von dem das Gespräch ausgeht, enthalten. Diese Ziffernfolgen sind in dem zweiten globalen Namen den restlichen Ziffern vorangestellt.

Bei Durchlaufen der Adressumsetzungsfunktion des globalen Namens in der Durchgangs-Vermittlungsstelle 21 werden die für die Betreiber stehenden Ziffernfolgen 44, 45 von den Signalisierungsnachrichten 33 und 35 auf die Signalisierungsnachrichten 32 und 34 übertragen. Somit ergeben sich die dritten globalen Namen 40 und 41, die nun zusätzlich zu der Adressinformation des Bestimmungsortes auch die Adressinformation des Herkunftsortes beinhalten.

Nachdem die GTT-Funktion die Adressinformation des anzurufenden Teilnehmers analysiert hat und eine passende Route zu dem nächsten Gateway ausgewählt hat, werden in den ausgehenden Signalisierungsnachrichten 28 und 30 die zusätzlichen Adressinformationen, die für die Herkunft des Gespräches stehen, aus den dritten globalen Namen 40 und 41 wieder entfernt. Anschließend findet eine Übertragung der Signalisierungsnachrichten über die Telekommunikationsfirmen 22 und 23 für die Fernvermittlung der Gespräche statt.

Die beschriebenen erfindungsgemäßen Verfahren sind nicht nur für das Hinzufügen von herkunftshinweisenden Adressinformationen verwendbar, sondern können für das Hinzufügen von Informationen jeder Art, die für die Signalisierungsnachrichtenübertragungen wichtig sind, verwendet werden.

## Patentansprüche

1. Verfahren zur Übertragung einer Signalisierungsnachricht (6-9, 12, 13; 24-35) in einem Netz vom Typ zeichengabesystem Nr. 7 (SS#7) von einem Quellen- zu einem Bestimmungsort (1, 2, 4, 5; 20, 22, 23) mittels eines SCCP (Signalling Connection Control Part)-Übertragungsprotokolls, wobei die Signalisierungsnachricht (6-9, 12, 13; 24-35) mit einem globalen Namen (14-17; 36-43) zur Identifizierung des Bestimmungsortes (4, 5; 22, 23) adressiert wird, **dadurch gekennzeichnet, dass** eine zusätzliche Adressinformation (10, 11; 44, 45) dem globalen Namen (14, 15; 36, 37) zugeordnet wird, bevor eine Adressumsetzung des globalen Namens im Netz vom Typ Zeichengabesystem Nr. 7 durchgeführt wird, um eine geeignete Route für die Übertragung der Signalisierungsnachricht (6-9, 12, 13; 24-35) zu bestimmen.

2. Verfahren nach Anspruch 1, **dadurch gekennzeichnet, dass** die zusätzliche Adressinformation (10, 11; 40, 41) eine Identifizierungsinformation (44, 45) eines Netzbetreibers von einem Netz am Quellenort (20) ist.

3. Verfahren nach Anspruch 1 oder 2, insbesondere nach Anspruch 1, **dadurch gekennzeichnet, dass** die zusätzliche Adressinformation (10, 11; 44, 45) eine Identifizierungsinformation (10, 11) einer Vermittlungsstelle am Quellenort (1, 2) ist.

4. Verfahren nach einem der vorangegangenen Ansprüche, insbesondere nach Anspruch 2 oder 3, **dadurch gekennzeichnet, dass** die Adressinformation (10, 11; 44, 45) als vorangestellte Ziffern in dem globalen Namen (16, 17; 40, 41) angeordnet wird.

5. Verfahren nach einem der vorangegangenen Ansprüche, **dadurch gekennzeichnet, dass** nach erfolgter Adressumsetzung des globalen Namens (16, 17; 40, 41) die zusätzliche Adressinformation (10, 11; 44, 45) gelöscht wird.

6. Vermittlungsstelle (3, 21) umfassend die erforderlichen Mittel zur Durchführung der einzelnen Schritte des Verfahrens nach einem der vorstehenden Ansprüche 1 bis 5.

7. Telekommunikationsnetz vom Typ Zeichengabesystem Nr. 7 (SS#7) umfassend die erforderlichen Mittel zur Durchführung der einzelnen Schritte des Verfahrens nach einem der vorstehenden Ansprüche 1 bis 5.

## Claims

1. Method for transmitting a signalling message (6-9, 12, 13; 24-35) in a network of signalling system No. 7 (SS#7) type from a source location to a destination (1, 2, 4, 5; 20, 22, 23) by means of an SCCP (Signalling Connection Control Part) transmission protocol, wherein the signalling message (6-9, 12, 13; 24-35) is addressed using a global name (14-17; 36-43) to identify the destination (4, 5; 22, 23), **characterized in that** an additional address information item (10, 11; 44, 45) is attributed to the global name (14, 15; 36, 37) before address conversion for the global name is performed in the network of signalling system No. 7 type in order to determine a suitable route for transmitting the signalling message (6-9, 12, 13; 24-35).

2. Method according to Claim 1, **characterized in that** the additional address information item (10, 11; 40, 41) is an identification information item (44, 45) for a network operator of a network at the source location (20).

3. Method according to Claim 1 or 2, particularly according to Claim 1, **characterized in that** the additional address information item (10, 11; 44, 45) is an identification information item (10, 11) for a switching centre at the source location (1, 2).

4. Method according to one of the preceding claims, particularly according to Claim 2 or 3, **characterized in that** the address information item (10, 11; 44, 45) is arranged in the global name (16, 17; 40, 41) as prefixed digits.

5. Method according to one of the preceding claims, **characterized in that** following address conversion for the global name (16, 17; 40, 41) the additional address information item (10, 11; 44, 45) is erased.

6. Switching centre (3, 21) comprising the requisite means for carrying out the individual steps of the method according to one of the preceding Claims 1 to 5.

7. Telecommunication network of signalling system No. 7 (SS#7) type comprising the requisite means for carrying out the individual steps of the method according to one of the preceding Claims 1 to 5.

## Revendications

1. Procédé de transmission d'un message de signalisation (6-9, 12, 13 ; 24-35) dans un réseau du type système de signalisation n° 7 (SS#7) d'un point source vers un point de destination (1, 2, 4, 5 ; 20, 22, 23) au moyen d'un protocole de transmission SCCP (Signalling Connection Control Part), le message de signalisation (6-9, 12, 13 ; 24-35) étant adressé avec un nom global (14-17 ; 36-43) pour l'identification du point de destination (4, 5 ; 22, 23), **caractérisé en ce qu'**une information d'adresse supplémentaire (10, 11 ; 44, 45) est associée au nom global (14, 15 ; 36, 37) avant qu'une conversion d'adresse du nom global ne soit effectuée dans le réseau du type système de signalisation n° 7 afin de déterminer un itinéraire adéquat pour la transmission du message de signalisation (6-9, 12, 13 ; 24-35).

2. Procédé selon la revendication 1, **caractérisé en ce que** l'information d'adresse supplémentaire (10, 11 ; 40, 41) est une information d'identification (44, 45) d'un opérateur de réseau d'un réseau au point source (20).

3. Procédé selon la revendication 1 ou 2, et plus particulièrement selon la revendication 1, **caractérisé en ce que** l'information d'adresse supplémentaire (10, 11 ; 44, 45) est une information d'identification (10, 11) d'un centre de commutation au point source (1, 2).

4. Procédé selon l'une des revendications précédentes, et plus particulièrement selon la revendication 2 ou 3, **caractérisé en ce que** l'information d'adresse (10, 11 ; 44, 45) est agencée sous la forme de chiffres antéposés dans le nom global (16, 17 ; 40, 41).

5. Procédé selon l'une des revendications précédentes, **caractérisé en ce que**, après que la conversion d'adresse du nom global (16, 17 ; 40, 41) a été effectuée, l'information d'adresse supplémentaire (10, 11 ; 44, 45) est supprimée.

6. Centre de commutation (3, 21), comprenant les moyens nécessaires pour exécuter les différentes étapes du procédé selon l'une des revendications précédentes 1 à 5.

7. Réseau de télécommunications du type système de signalisation n° 7 (SS#7), comprenant les moyens nécessaires pour exécuter les différentes étapes du procédé selon l'une des revendications précédentes 1 à 5.
